# EUROPEAN PATENT SPECIFICATION

(11) **EP 2 620 303 B1**
(45) Date of publication and mention of the grant of the patent: **13.05.2015**
(21) Application number: 13158034.2
(22) Date of filing: 04.05.2010
(51) Int. Cl.: B60G 17/0165, B60G 17/08, B62K 25/04, F16F 9/44, F16F 9/06, B60G 17/016, B60G 15/12

(54) **Suspension System for a Vehicle**
Aufhängungssystem für ein Fahrzeug
Système de suspension pour un véhicule

(30) Priority: 04.05.2009 US 175422 P
(43) Date of publication of application: 31.07.2013
(62) Divisional of application: 10161906.2
(73) Proprietor: Fox Factory, Inc., Watsonville, CA 95076 (US)
(72) Inventor: GALASSO, Mario, CA 95076 (US); FOX, Robert C., CA 95030 (US); KASWEN, Robert David, CA 95076 (US); HAUGEN, David M., CA 93950 (US)
(74) Representative: Casbon, Paul Richard

(56) References cited:
- EP-A1- 0 552 568
- EP-A1- 1 241 087
- EP-A1- 1 394 439
- DE-A1- 3 738 048
- DE-A1-102005 025 811
- JP-A- 2007 302 211
- US-A- 5 884 921
- US-A1- 2003 160 369
- US-A1- 2004 222 056
- US-A1- 2006 065 496
- US-A1- 2006 289 258
- US-A1- 2008 059 025
- US-B1- 6 254 067
- US-B1- 7 287 760

## Description

This Application claims priority to US Provisional Application Serial Number 61/175,422 filed May 4th, 2009.

The present invention relates to a bicycle.

Integrated damper / spring vehicle shock absorbers often include a damper body surrounded by a mechanical spring. The damper often consists of a piston and shaft telescopically mounted in a fluid filled cylinder. The mechanical spring may be a helically wound spring that surrounds the damper body. Various integrated shock absorber configurations are described in U.S. patent nos. 5,044,614; 5,803,443; 5,553,836; and 7,293,764. The shock absorber of U.S. Patent 7,293,764 is shown, in exploded view, therein in Figure 7. As shown, the shock absorber comprises a damper assembly 60 and a helical spring 65. Noteworthy is that the wound wire forming the helical spring 65 includes abrupt ends 70.

U.S. Patent No. 5,044,614 ("614 patent") shows a damper body carrying a thread 42. A helical spring 18 surrounds the damper body. The compression in the helical spring 18 may be pre-set by means of a nut 48 and a lock nut 50. The nut 48 may be translated axially relative to the body ("tube") 16 and thread 42 by rotating the nut 48 around the threaded sleeve 42. Rotation of the nut 48 in a given direction (e.g. clockwise as viewed from end 44 for a right hand thread 42) will cause the nut to move toward the retainer clip 26 thereby compressing spring 18 between the nut 48 and the retainer clip 26. Once the spring 18 is in a desired state of compression, lock nut 50 is rotated, using a wrench, up against nut 48 and tightened in a binding relation therewith.

Some shock absorbers utilize gas as a spring medium in place of, or in addition to, mechanical springs. Gas spring type shock absorbers, having integral dampers, are described in U.S. patent nos. 6,135,434; 6,360,857 and 6,311,962. Patent number 6,360,857 shows a shock absorber having selectively adjustable damping characteristics. US Patent no 7,163,222 describes a gas sprung front shock absorber for a bicycle (a "fork") having a selective mechanical "lock out" and adjustable mechanical "blow off" function. For purposes herein reference to a shock absorber includes front shock absorbers, or forks, of two (or some three) wheeled vehicles.

The spring mechanism (gas or mechanical) of some shock absorbers is adjustable so that it can be preset to varying initial states of compression. In some instances the shock spring (gas or mechanical) may comprise different stages having varying spring or damping rates thereby giving the overall shock absorber a compound spring rate depending varying through the stroke length. In that way the shock absorber can be adjusted to accommodate heavier or lighter carried weight, or greater or lesser anticipated impact loads. In vehicle applications including motorcycle and bicycle applications and particularly off-road applications, shock absorbers are pre-adjusted to account for varying terrain and anticipated speeds and jumps. Shocks are also adjusted according to certain rider preferences (e.g. soft - firm).

A type of integrated spring / damper shock absorber, having a gas spring, is shown in Figure 28, for example, of US patent no. 7,374,028. The shock of Figure 28 also includes an "adjustable intensifier assembly 510." That intensifier or "reservoir" accepts damping fluid from chamber 170 as the fluid is displaced from that chamber by the incursion of rod 620 into chamber 170 during a compression stroke of the shock. The intensifier valve assembly regulates flow of damping fluid into and out of the reservoir and an embodiment of the valve assembly is shown in Figure 17 of that document.

It is desirable to "lock" the suspension, thereby rendering it substantially rigid, on certain vehicles at certain times. Such a lock may be particularly desirable on bicycles to reduce or eliminate so called "pedal bob" or "chain squat" (the cyclic compression and extension of suspension caused by the cyclic tension of the drive chain and the cyclic motion of the pedals, cranks and power input generally), often caused when cycling uphill. Once the period of pedal bob has finished it is desirable to "unlock" the suspension, so that a flat or downhill section can be negotiated at higher speed. It is noteworthy that the valve assembly of Figure 17 of US 7,374,028 may be replaced with any suitable valve assembly depending on the desired result. For example, when the valve is configured (as will be further described herein) with a selectable and correspondingly selected "lock out" (i.e. functionally absolute valve closure) damping fluid is excluded from entering the reservoir and, the damping fluid being a relatively incompressible liquid, such exclusion prevents the volume of chamber 170 from being reduced and thereby prevents the shock absorber from compressing telescopically. Such "lock out" is selectively provided via an external direct mechanical manual adjuster, such as for example knob 512 of Figure 17 of US 7,374,028.

One particular problem with direct adjust selective lock out functionality on bicycles is that it is very difficult (in some cases impossible) for a rider to lock and unlock the damping function of the front and/or rear damper whilst riding the bicycle. It is difficult and dangerous to release grip on the handlebars particularly when the terrain is changing but that is often precisely the time when locking or locking of suspension would be desirable. Usually the rider has to stop, possibly dismount, and then lock or unlock the damper.

A similar problem also exists on other vehicles such as trucks, ATVs, off-road motorcycles, etc. Any such vehicle that is capable of driving both on road and off road (i.e. on one type of terrain that is relatively smooth compared to another type of surface that can be relatively rough) usually has suspension with a larger range of travel than a vehicle intended exclusively for on road use. When moving from off-road to on road and vice versa there is no way, absent stopping and dismounting or exiting the vehicle, for the driver to lock and unlock the suspension to provide for better ride and handling according to the terrain.

US 2006/289258 A1 discloses a damper including a piston rod, a damping piston, at least one cylinder containing a damping liquid, a fixed partition member for partitioning the interior of the damper into two liquid chambers, a pressure source, and a valve in communication with the pressure source which reacts as a function of the pressure. The valve can also be in communication with additional forces, such as mechanical spring forces, which can be adjustable. The valve can include a pressure intensifier. The valve generates fluid flow resistance during flow of liquid in a first direction through the partition member. The fluid flow resistance in the first direction varies according to the amount of force communicated to the valve by the pressure source and any additional forces. The partition member can include means for providing low-resistance return flow of liquid in a second direction.

DE 37 38 048 A1 discloses a device for damping the movements of the masses of a linear two-mass oscillator such as that which is present, for example, in a wheel-suspension system of a motor vehicle with two spring-damper systems connected in series. The spring-damper system arranged between the two masses is assigned a controller, the actuating signal of which influences the transmission behaviour of a controlled damping member in such a way that the damping force is proportional to the sum of the separately weighted absolute velocities of the two masses. In this way, it is said that it is possible to raise the oscillation screening of the two spring-damper systems in the frequency range between the natural frequencies of the two systems and to reduce the thermal loading of the damping member.

EP 1 241 087 A1 discloses a computer controlled suspension system for a bicycle which is said to effectively absorb shock and provide stability on rough surfaces regardless of the speed of the vehicle. The suspension system has a control unit, a front suspension, a rear suspension, a front wheel terrain sensor, and a rear controller. The rear suspension is selectively adjustable by the control unit to change stiffness of the rear suspension. When the front suspension hits a bump or a depression in the surface of the ground, a signal is sent to the rear controller so that the rear suspension can react appropriately. In one embodiment, a pedalling torque sensor is operatively coupled to the control unit to input a signal that is indicative of pedalling force, and the rear controller adjusts stiffness of the rear suspension in response to the pedalling force via the control unit. In another embodiment, one or more gear position sensors are operatively coupled to the control unit to input a signal that is indicative of gear position, and the rear controller adjusts stiffness of the rear suspension in response to the gear position force via the control unit. A locking mechanism is provided to operatively coupled to selectively lock the rear suspension in a compressed condition. The front and rear suspension preferably uses at least a cylinder with a coil spring and a compressible material located between individual turns of the coil spring.

US 2004/222056 A1 discloses a damper having a valve movable between an open position and a closed position to selectively alter the compression damping rate of the shock absorber. The valve may include a self-centering feature that operates to keep the valve body centered about the valve shaft. The damper may also include a timer feature, which retains the valve in an open position for a predetermined period of time after it is initially opened.

US 2006/065496 A1 discloses a damper having an inertia valve movable between an open position and a closed position to selectively alter the compression damping rate of the shock absorber. The damper has at least one chamber that at least partially surrounds two other chambers.

US 6 254 067 B1 discloses a fluid regulating device including a regulator housing that confines a valve receiving chamber and a fluid chamber filled with hydraulic fluid. The regulator housing is formed with a fluid opening that is in fluid communication with the valve receiving chamber and that is connected fluidly to a fluid port of a hydraulic cylinder device. A pneumatic cylinder device includes a cylinder housing with a piston member slidingly and sealingly disposed therein to divide the same into a volume-variable pressurized gas compartment and a volume-variable fluid compartment which is in fluid communication with the fluid chamber via a fluid aperture. A regulating valve unit is disposed in the valve receiving chamber to control flow rate of the hydraulic fluid between the fluid opening and the fluid chamber.

DE 10 2005 025811 A1 discloses a bicycle comprising a chassis provided with acceleration sensors to measure vertical acceleration of oscillating systems of a front wheel and body acceleration of the chassis. A controller or an electronic control unit detects driving condition by considering difference between the vertical and body accelerations. The sensors use the acceleration as a measurand in the controller or the control unit for adjusting damping coefficients of a front wheel damping unit or a rear damper.

### SUMMARY OF THE INVENTION

According to the present invention there is provided a bicycle comprising a frame having a sprung portion and an unsprung portion, which bicycle further comprises:
a terrain sensor;
an electronically adjustable damping assembly mounted between the sprung portion and the unsprung portion, said electronically adjustable damping assembly comprising an electronically adjustable valve for controlling a damping rate of the electronically adjustable damping assembly; and
a controller comprising a processor for directing a position of the electronically adjustable valve in response to input from the terrain sensor;
wherein said terrain sensor comprises a first acceleration sensor fixed to said unsprung portion and a second acceleration sensor fixed to the sprung portion, and in that said controller is adapted to receive an input from each of the first and second acceleration sensors respectively, to compare each of the inputs, to determine a setting position for the electronically adjustable valve according to said comparison, and to direct said electronically adjustable valve to said setting position whereby automatic control of the damping rate of the electronically adjustable damping assembly is provided; and
a pedal force sensor providing an input to said controller, wherein if said input from said second acceleration sensor is synchronized in frequency with the input from said pedal force sensor, the controller directs closure of said electronically adjustable valve until said synchronisation is eliminated or reduced.

In some embodiments the controller may be a microcontroller or other processing device e.g. ASIC. In some aspects the controller may be of a simpler form and might be integrated with the actuator; for example the controller can be a circuit that controls the actuator in response to 'high' and 'low' voltage from the device.

Further features of the bicycle are set out in claims 2 to 14 to which attention is hereby directed.

### BRIEF DESCRIPTION OF THE FIGURES

For a better understanding of how the invention may be put into practice, preferred embodiments of the invention applied to a bicycle will be described, by of example only, with reference to the accompanying drawings, in which:
Fig. 1 is a schematic side view of a bicycle according to the present invention;
Fig. 2A is a side view in cross section of one embodiment of a damper useful in understanding the present invention;
Fig. 2B is an enlarged view of part of the damper of Fig. 2A; and
Fig. 3 is a schematic block diagram of components of one embodiment of an electric lock out apparatus useful in understanding the present invention.

### DETAILED DESCRIPTION OF THE PREFERRED EMBODIMENTS

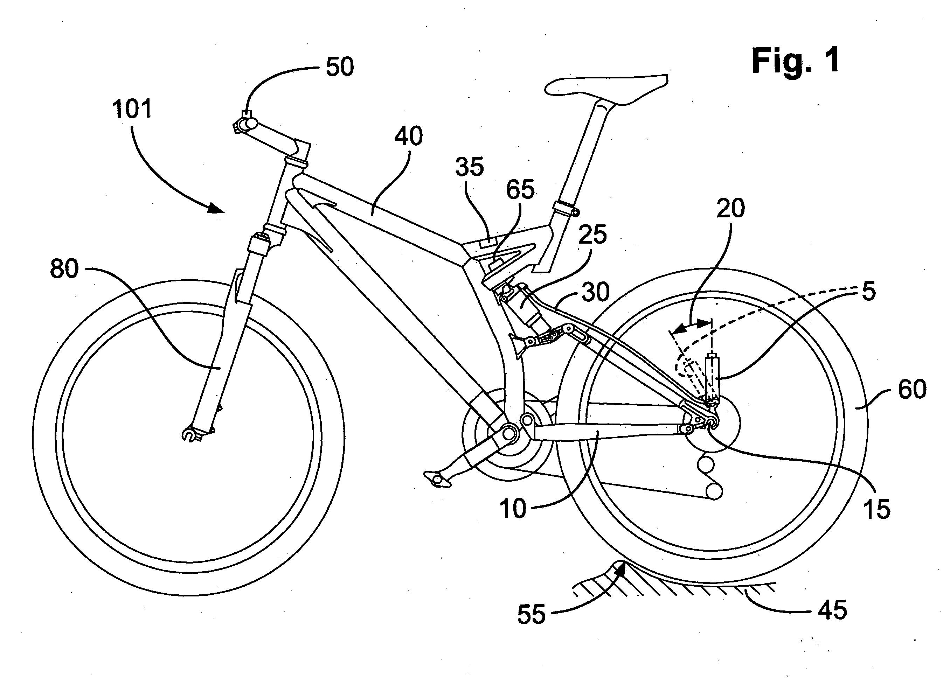

Referring to Figure 1, a bicycle generally identified by reference numeral 101 comprises a frame 40 and front forks 80. In this embodiment the frame 40 has a suspension system comprising a swing arm assembly 10 that, in use, is able to move relative to the rest of the frame; this movement is permitted by inter alia a rear shock absorber or damping assembly 25. The front forks 80 also provide a suspension function via a damping assembly in each fork leg; as such the bicycle 101 is a full suspension bicycle (such as an ATB or mountain bike), although the invention is not limited to use on full suspension bicycles. In particular the term 'suspension system' is intended to include bicycles having front suspension or rear suspension only, or both.

A sensor 5 is positioned proximate a rear axle 15 of a bicycle 101 1 for sensing changes in terrain. As shown in Figure 1, the sensor 5 is mounted on the swing arm assembly 10 proximate the rear axle 15 of the bicycle 101. The angular orientation of the sensor 5 is movable through range 20 (and is shown in each of two possible limit positions), thereby allowing alteration of a force component sensed by the sensor in relation to a force (vector) input into the swing arm assembly 10. A preferred value for the range 20 is approximately 120°, and more preferably 100°. It is understood that the sensor 5 may be moved or mounted in any suitable configuration and allowing for any suitable range of adjustment as may be desirable. That is useful for adjusting the sensitivity of the sensor to various anticipated terrain and bicycle speed conditions (the bicycle speed affects the vector magnitude of a force input to the bicycle wheel for constant amplitude terrain disparity or "bump / dip." Varying size bumps and dips also affect the vector input angle to the wheel for constant bicycle speed).

The sensor 5 (and sensor 35 and pedal force sensor) may be any suitable force or acceleration transducer (e.g. strain gage, wheatstone bridge, accelerometer, hydraulic, interferometer based, optical, thermal or any suitable combination thereof). The sensor 5 may utilize solid state electronics, electro-mechanical principles or MEMS, or any other suitable mechanisms. In one embodiment the sensor 5 comprises a single axis self powered accelerometer, such as for example ENDEVCO(RTM) model 2229C. The 2229C is a comparatively small device with overall dimensions of approximately 15mm height by 10mm diameter, and weighs 4.9g. Its power is self-generated and therefore the total power requirements for the bicycle 101 are reduced; this is an important advantage, at least for some types of bicycle, where overall weight is a concern. An alternative single axis accelerometer is the ENDEVCO(RTM) 12M1A, which is of the surface-mount type. The 12M1A is a single axis accelerometer comprising a bimorph sending element which operates in the bender mode. This accelerometer is particularly small and light, measuring about 4.5mm by 3.8mm by 0.85mm, and weighs 0.12g. In other embodiments, the sensor 5 may be a triaxial accelerometer such as the ENDEVCO(RTM) 67-100. This device has overall dimensions of about 23mm length and 15mm width, and weighs 14g.

The sensor 5 may be attached to the swing arm assembly 10 directly, to any link thereof, or to an intermediate mounting member (not shown) as may be useful. In one embodiment according to the invention a sensor 5 is fixed to an unsprung portion of the bicycle 101, such as for example the swing arm assembly 10, and another sensor 35 (such as an accelerometer as described above) is fixed to a sprung portion of the bicycle 101, such as the frame 40. Sensors may be integrated with the vehicle structure and data processing system as described in US patent nos. 6,863,291; 4,773,671; 4,984,819; 5,390,949; 5,105,918; 6,427,812; 6,244,398; 5,027,303 and 6,935,157. Sensors and valve actuators (e.g. electric solenoid or linear motor type - note that a rotary motor may also be used with a rotary actuated valve) may be integrated herein utilizing principles outlined in SP-861-Vehicle Dynamics and Electronic Controlled Suspensions SAE Technical Paper Series no. 910661 by Shiozaki et. al. for the International Congress and Exposition, Detroit, Michigan, February 25 - March 1, 1991.

As mentioned above, the rear shock absorber 25 is operatively mounted between an unsprung portion of the bicycle 101, such as the swing arm assembly 10 and rear axle 15, and a sprung portion of the bicycle 101 such as the frame 40. A representative example embodiment of shock absorber 25 derives from a modification, as disclosed herein, of the shock absorber shown in Figure 28 of, and elsewhere in, US patent no. 7,374,028 (the "'028" patent).

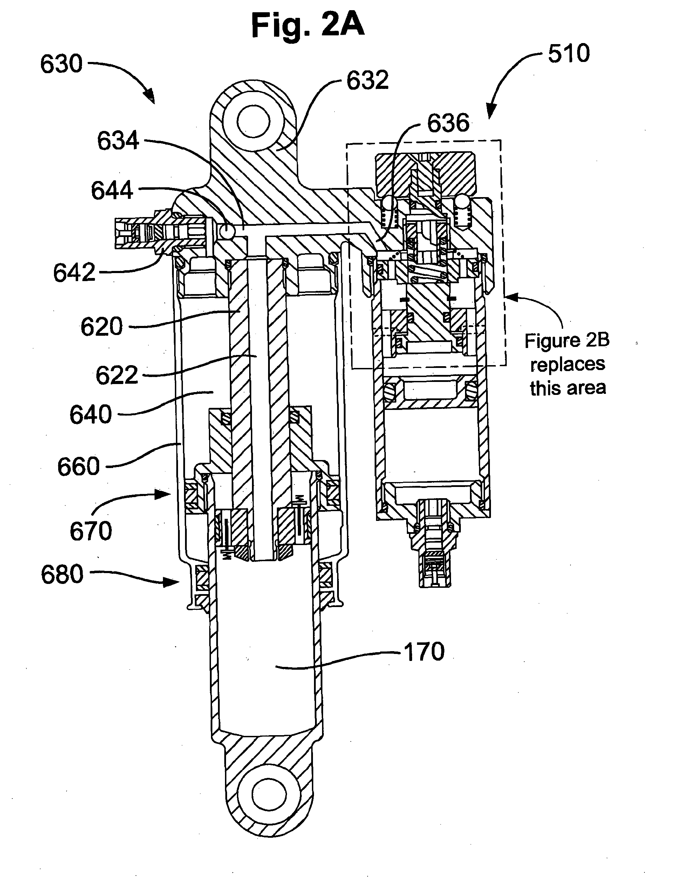

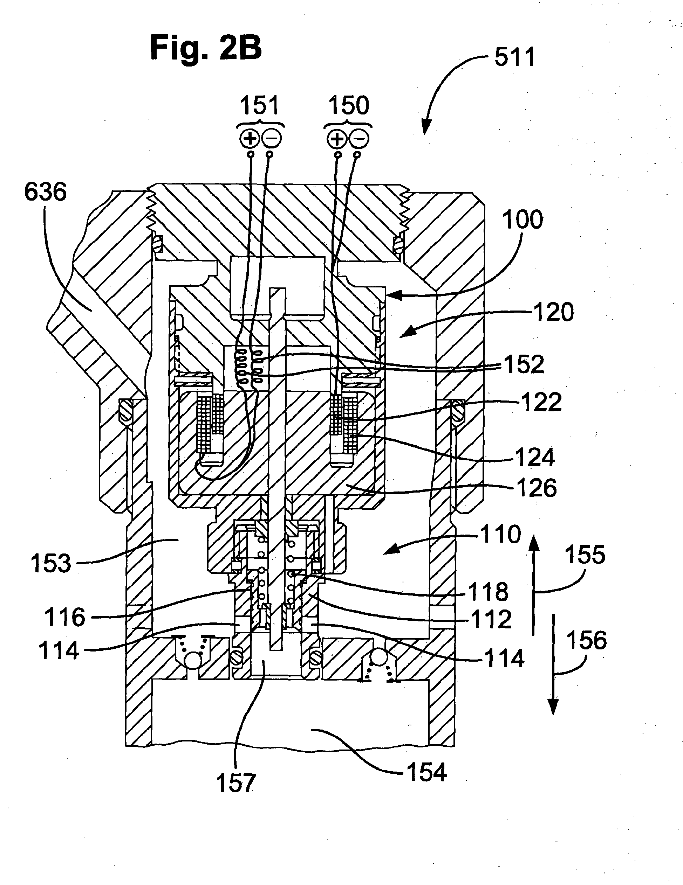

Referring to Figure 2A herein (from the '028 patent), intensifier assembly 510 is shown in conjunction with damper assembly 630. Figure 2B shows an embodiment of an intensifier valve 511 for use with the principles disclosed herein. As shown in Fig. 2A the intensifier valve 511 of Figure 2B replaces the assembly 510, as shown in Figures 15, 17 and elsewhere in the '028 patent. The intensifier valve 511 is operable in response to electric signal and is capable of being modulated or throttled for selective full opening, closing and intermediate opening or "throttle" positions. The intensifier valve 511 comprises a valve portion 110 and an actuator portion 120. The valve portion 110 may include a cylinder 112 with one or more variable orifices 114 and a member (e.g. piston) 116 that moves within the cylinder 112 to control the opening of the orifice(s) 114. The valve 100 is in a closed position when the piston 116 is covering the orifice(s) 114. The valve 100 is in an open position when the piston 116 moves away from the orifice(s) 114 such that at least a portion of the orifice(s) 114 is opened. In the open position, fluid may flow into the valve portion 110 and may flow out of the valve portion 110. The position of the piston 116 relative to the orifice(s) 114 varies the orifice opening and the flow through the valve portion 110. The valve 100 may thus provide an output pressure in response to an input flow.

The valve portion 110 may also include a spring 118 that applies a force against the piston 116 to bias the piston 116 toward the closed position. Fluid pressure against the piston 116 may result in a force that exceeds the spring force causing the piston 116 to move and open the orifice(s) 114.

The actuator portion 120 may also apply a force to the piston 116. The actuator portion 120 may advantageously be back drivable to permit the pressure term to push open the valve, for example, during the onset of a high shock event. One embodiment of the actuator portion 120 is a voice coil type linear actuator including a voice coil 122, a magnet 124, and a back iron 126. The back iron 126 is coupled to the piston 116 such that linear movement of the back iron 126 causes linear movement of the piston 116.

The actuator portion 120 may be controlled using a command such as a voltage command, for example, provided by drive electronics (not shown). A voltage command or signal to the actuator portion 120 causes current to flow through the coil 122, creating a magnetic field that applies a force to the magnet 124 and back iron 126. Different voltage commands may thus correspond to different amounts of force applied to the piston 116 in the valve 100. In one embodiment the signals and actuator are configured to move the valve completely between a full open ('unlocked') and a full closed position ('locked') thereby allowing the damper to move or substantially locking it, i.e. adjusting the damping rate of the damping assembly 630 between minimum and maximum respectively.

Although one exemplary valve is shown, those skilled in the art will recognize that other types of pressure relief valves may be used. Although the exemplary actuator 120 is a voice coil type linear actuator, those skilled in the art will recognize that other types of actuator technologies may be used. For example, the sensors, switches, controllers, actuators and other operative elements hereof may comprise optical circuitry and as such the power source may comprises an optical (or other electromagnetic) generator such as a "LASER" and wiring and circuits used herein may comprises fiber optic and optic circuitry including Bragg grating technology and other suitable "electrical equivalents." The elements hereof may be operable in whole or in part based on sonic wave or microwave transmission and suitable waveguide technology may be employed.

It should also be noted that 122 and 124 are interchangeable such that the voice coil may be either 122 or 124 and the magnet may be the other of 122 and 124 respectively. The voice coil 122 or 124 responds to input current from the power circuit (e.g. position control circuit or other suitable electrical input as described herein). As such input wiring is desirable. The input wiring and terminals for the 122 version of the voice coil is shown at 150. The input wiring and terminals for the 124 version of the voice coil is shown at 151 and includes windings 152 to accommodate extension and contraction of the throughput wires 152 during operation of the valve 100

The valve 100 is shown in a closed, or downward 156, position. As such, piston 116 fully obstructs orifices 114 thereby preventing fluid from flowing from damper assembly 630, through channel 636, into upper chamber 153, through orifice 114, through valve outlet 157 and into floating piston compensator chamber 154. When current of an appropriate magnitude is applied to the voice coil 122 or 124, the magnet electromagnet combination of 122 and 124 causes the back iron 126, and correspondingly the valve piston 116, to move upward 155 in an amount proportional to the voice coil input. Such upward 155 movement is against spring 118, which biases the valve piston 116 downward 156 (i.e. toward closed), and therefore when the voice coil input balances with the force of spring 118, movement of the piston 116 will stop and the valve 100 will be correspondingly throttled.

In operation, the sensor 5 and the sensor 35 output a voltage change corresponding to an input force and the outputs from both sensors are reconciled in a controller (described in greater detail below), such as a microprocessor, having an algorithm for weighting their respective inputs and generating a resulting singular command or signal based on a predetermined logic. In one embodiment the sensor 5 senses input force along a prescribed axis 20. A bump in the terrain 45 typically exerts a force 55 on a bicycle wheel. The angle of the resolved force 55 relative to the tire/wheel 60 is typically normal (substantially) to the tire/wheel 60 at the point of impact. That force 55 then imparts a component of the impact 55 to the axle 15 as dictated by the swing arm assembly 10. That component can be sensed by the sensor 5 at a magnitude corresponding to the orientation of the sensor axis 20. The sensor axis orientation can be adjusted by the user and/or bicycle manufacturer to make the sensor more or less sensitive (by imparting more or less of the impact 55 to the axis 20) to bumps and dips in the terrain.

It is envisaged that there are various ways the remote lock/unlock function of the rear shock absorber 25 and/or front shock absorber 80 may be provided on the bicycle 101. In particular, remote lock/unlock may be entirely automatically controlled by a controller 65 in response to the input from the sensor 5 when the bicycle 101 is in use. Optionally, the user may be able override and/or adjust this automatic control using a device 50. In another aspect, the remote lock/unlock of the rear shock absorber 25 (and/or front shock absorber 80) may be entirely controlled at the user's discretion using the device 50; in such an aspect the sensor 5 need not be provided on the bicycle 101 and the user locks and unlocks the suspension system according to his or her own preferences at the time.

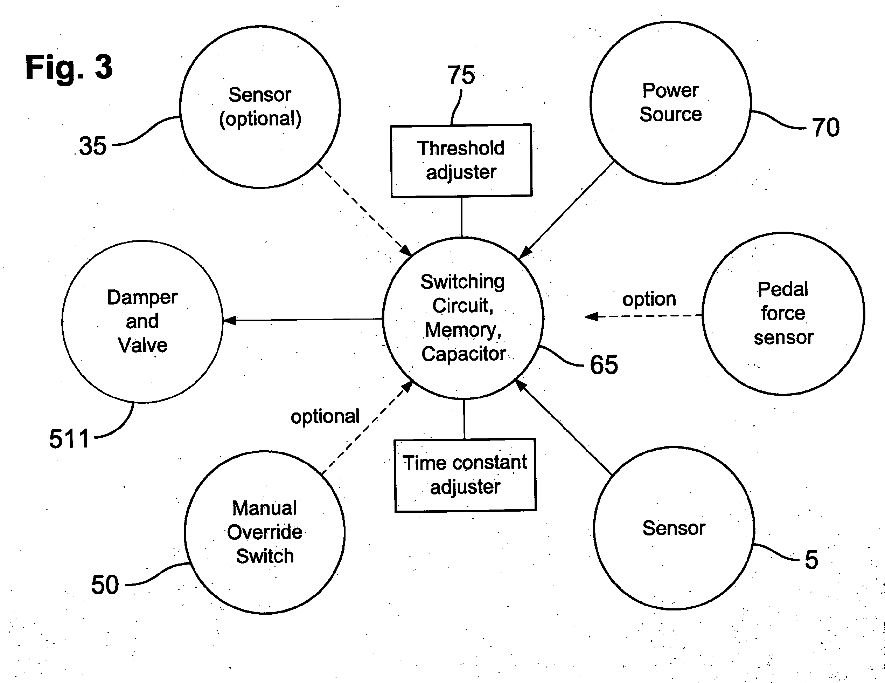

Referring additionally to Figure 3, a block diagram shows components of embodiments used to implement fully automatic control with optional manual override. In use, when the sensor 5 puts out, for example, a voltage corresponding to a bump (and/or optionally a dip) that voltage is transmitted to the controller 65 (e.g. comprising a memory and a processor/microprocessor, or an ASIC). In one aspect the rear shock absorber 25 (comprising damper 630 and intensifier 510) of Figures 2, including valve 511, is responsive to signals and power transmitted from the controller 65. The valve 511 is default in the closed position and will throttle open corresponding to power input received at terminals 150. The controller 65 compares the output voltage of sensor 5 to a preset (by means of threshold adjuster 75 such as, for example, a potentiometer) voltage value and if that value is exceeded, the controller 65 routes a predetermined amount of power from the power source 70 (e.g. suitable battery, capacitor, photovoltaic generator or other suitable mechanism or combination thereof) to the valve 511. Optionally the controller 65 compares the output voltage to a magnitude comparator value over time (the time constant is also user adjustable). In that option the magnitude of the output voltage must remain above a given threshold value for a predetermined amount of time before the controller 65 will route power to the valve 511. When the output voltage falls below the threshold value, power to the valve 511 is shut off. Optionally, the controller 65 may taper power off over a selectable period of time as part of the shut off function. Optionally, multiple threshold values may be set in the controller 65. At each threshold value may direct a differing amount of power from the source 70 to the valve 511. If, for example, only a lower threshold is met, the controller 65 may direct an amount of power only corresponding to a partial opening of the valve 511. If a higher threshold is met the directed amount of power may correspond to a full open valve 511. Multiple time constants may also (independently or additionally) be preset for different corresponding valve 511 function levels. Optionally the valve 511 may be of a type described in US patent no. 6,073,736. Optionally, the valve control / power circuit may be configured and operable in a manner such as disclosed in US patent nos. 5,971,116 and 6,073,736, or by any other means or method disclosed herein or any suitable combinations or portions thereof.

In one aspect, a manual lock (or unlock or both) device is provided in a location convenient for user manipulation during vehicle operation. In one aspect such a signal generating device 50 is provided on the handlebar of a bicycle 101 (or other part of the bicycle 101 that is reachable during use). Optionally the signal generating device 50 includes the functions of locking and unlocking valve 511, and (if applicable) adjusting threshold(s) 75 and adjusting time constant(s) all as shown in Figure 3. Thus at its simplest, the device 50 allows the user to remotely lock/unlock the rear shock 25 (and/or the front shock 80) at will. The signal generating device 50 may cause both front and rear shocks to lock/unlock together, or it may permit the user to lock/unlock each shock independently.

In one aspect the signal generating device 50 comprises a lever that is shiftable by the user of the vehicle. The lever may shift between first and second positions (each corresponding to a 'lock' and 'unlock' command to the damping assembly). Alternatively the lever may move away from a first position and then back to that position to switch between locked and unlocked; such movement may be similar to the way indexed gear shifters operate.

In one aspect, the signal generating device 50 comprises a digital device provided with buttons and/or a touchscreen enabling the user to lock and unlock the damping assembly at will. The functionality of the signal generating device 50 may be incorporated into performance recording devices, such as, but not limited to, the GARMIN EDGE(RTM) series of devices.

In other aspects, the signal generating device 50 may provide additional functionality to enable to user to remotely control the rear and/or front shock more finely. For example, the signal generating device 50 may permit the user to remotely set a shock (i.e. the amount that the intensifier valve 511 is open/closed) at one of a number of predefined indexed positions between locked and unlocked, or may permit the user set the shock at substantially any position between those two limits. For example the position of the valve 100 may correspond with a position of an indicator on the signal generating device 50. The indicator may be a visual indication (e.g. digital indicator), or a physical indicator (e.g. position of a lever between two limit positions).

The default position of the intensifier valve 511 may be either open or closed, or somewhere in between. In one aspect valve 511 is default set open. In one aspect the actuator moves the valve in one direction from its default or bias and it returns to bias by means of a spring or other suitable biasing mechanism when the actuator ceases to function. Controller 65 monitors sensor 5 and 35 and after a time period of input corresponding to below threshold sensor output the processor direct power to 511 sufficient to close the valve (the electromagnetic or voice coil being reversed by power input and the spring 118 set as a tensile spring to hold the valve 511 open by default). Optionally (or independently and absent the sensors 5 and 35) the manual switch 50 communicates a signal to the controller 65 and that causes the controller 65 to direct power from source 70 to valve 511 thereby closing valve 511 completely or partially as desired. Optionally, a rider of the bicycle 101 may manipulate the signal generating device 50 to direct the valve 511 (100) to close, to open, to throttle at intermediate positions, as desired while operating the bicycle 101 or varying terrain (to eliminate pedal bob or maximize ride comfort or traction).

Some or all of components of embodiments herein including sensors and switches, controller 65, shock absorber 25, and valve 511/100 at terminals 150 or 151, may be interconnected or connected by wire 30, wireless, WAN, LAN, Bluetooth, WiFi, ANT, GARMIN(RTM) low power usage protocol, or any suitable power or signal transmitting mechanism. It is particularly desirable in certain embodiments that the signal generating device 50 can communicate wirelessly with the controller 65. An output electric signal from the signal generating device 50 is transmitted to the controller 65. The controller 65 responds to that signal by adjusting the damping rate of the damping assembly to lock or unlock, and/or set at some intermediate level according to the output electric signal.

In one aspect the rear shock absorber 25 further operates with mechanically variable damping and/or spring features when the valve 511 is open or partially open. In one aspect the "lock out" valve 511 is positioned in series with the intensifier valve 510 of US patent 7,374,028 so that fluid must traverse both valves between the damper channel 636 and the compensator chamber 154. In operation, the damping function of the shock absorber 25 is consistent with the operation of the intensifier valve 510 when the lock valve 511 is open. Other mechanical shock absorber functions may also be integrated with the present disclosure such that the shock absorber 25 is highly versatile and functional when valve 511 is open. Such features are disclosed for example in US provisional patent application serial number 61/157,541 and any individual or combination of the features disclosed therein is suitable for combination with embodiments of this present disclosure. In one embodiment of operation it is desirable to have the features of a highly versatile yet robust mechanically adjustable shock absorber in combination with the electric lock out presently disclosed.

In one aspect, the controller 65 takes a derivative of the acceleration for forecasting and implementing adjustment of valve 511 (rebound issue is a big deal). For example, if a bump is encountered followed immediately by a dip, it may be desirable to have the rebound of the tire into the dip (terrain following for traction advantage) occur very rapidly. If the valve 511 were opened to an intermediate state as determined by the controller 65, for the bump an immediately following large magnitude reversal of the derivative of the acceleration (as input from the sensor 5) may indicate that the processor direct the power source to full opening of the valve 511 to allow maximum rebound velocity. The controller 65 compares input from sensor 35 and sensor 5 to determine optimum setting position for valve 511. In particular, if input from sensor 35 is relatively low in magnitude the processor opens valve 511 gradually until some increase in 35 is noted and then close 511 back slightly from that. In one embodiment according to the invention if input from sensor 35 is consistent in frequency with input from a pedal force sensor (e.g. US patent no. 5,027,303), the controller 65 directs a closure of valve 511 until such synchronization is eliminated or reduced.

While the foregoing is directed to embodiments of the present invention, other and further embodiments of the invention may be implemented without departing from the scope of the invention, and the scope thereof is determined by the claims that follow.

## Claims

1. A bicycle (101) comprising a frame having a sprung portion (40) and an unsprung portion (10), which bicycle further comprises:
a terrain sensor;
an electronically adjustable damping assembly (25, 80) mounted between the sprung portion (40) and the unsprung portion (10), said electronically adjustable damping assembly comprising an electronically adjustable valve (100) for controlling a damping rate of the electronically adjustable damping assembly (25, 80); and
a controller (65) comprising a processor for directing a position of the electronically adjustable valve (100) in response to input from the terrain sensor;
wherein said terrain sensor comprises a first acceleration sensor (5) fixed to said unsprung portion (10) and a second acceleration sensor (35) fixed to the sprung portion (40), and in that said controller (65) is adapted to receive an input from each of the first and second acceleration sensors respectively, to compare each of the inputs, to determine a setting position for the electronically adjustable valve (100) according to said comparison, and to direct said electronically adjustable valve (100) to said setting position whereby automatic control of the damping rate of the electronically adjustable damping assembly is provided; and
a pedal force sensor providing an input to said controller (65), wherein if said input from said second acceleration sensor (35) is synchronized in frequency with the input from said pedal force sensor, the controller (65) directs closure of said electronically adjustable valve (100) until said synchronisation is eliminated or reduced.

2. A bicycle as claimed in claim 1, wherein said controller (65) comprises an algorithm for weighting said respective inputs in said comparison step and to generate a singular signal therefrom.

3. A bicycle as claimed in claim 1 or 2, wherein if said input from said second acceleration sensor (35) is relatively low in magnitude, said controller (65) is adapted to gradually open said electronically adjustable valve (100) until some increase in the input from said second acceleration sensor (35) is noted by said controller (65), and then to close the electronically adjustable valve (100) back slightly from that position.

4. A bicycle as claimed in any preceding claim, wherein said automatic control provided by said controller (65) comprises automatic locking and unlocking of said adjustable electronically adjustable valve (100) in response to said comparison of the inputs from said first acceleration sensor (5) and second acceleration sensor (35).

5. A bicycle as claimed in any preceding claim, wherein said automatic control provided by said controller (65) may be overridden and/or adjusted by a user-operable device (50) that is mounted on said bicycle in a position that is reachable by a rider of the bicycle, such as on the handlebar, and that is in communication with said controller (65).

6. A bicycle as claimed in claim 5, wherein manipulation of said user-operable device (50) enables a rider of the bicycle to override the controller (65) and to lock and unlock the electronically adjustable valve (100).

7. A bicycle as claimed in claim 5 or 6, wherein manipulation of said user-operable device (50) enables a rider of the bicycle to override the controller (65) and to direct the position of the electronically adjustable valve (100) to close, to open, or to throttle at intermediate positions as desired.

8. A bicycle as claimed in any preceding claim, wherein said first acceleration sensor (5) is positioned proximate a rear axle (15) on said unsprung portion (10) of said bicycle (101).

9. A bicycle as claimed in claim 8, wherein said first acceleration sensor (5) senses input force along a prescribed axis, and wherein the orientation of the prescribed axis is adjustable by the user and/or bicycle manufacturer to make the first acceleration sensor (5) more or less sensitive to bumps and dips in terrain.

10. A bicycle as claimed in claim 9, wherein an angular orientation of said prescribed axis is movable through a range (20), and optionally wherein said range (20) is approximately 120°, and more preferably 100°.

11. A bicycle as claimed in any preceding claim, wherein said first acceleration sensor (5) and/or said second acceleration sensor (35) comprises a single axis or triaxial accelerometer, preferably which generates its own power during use.

12. A bicycle as claimed in any preceding claim, wherein said electronically adjustable valve (100) comprises an actuator (120), and said controller (65) controls movement of said actuator (120) whereby a damping rate of said electronically adjustable valve (100) is adjusted by movement of the actuator (120).

13. A bicycle as claimed in any of claims 1 to 11, wherein said electronically adjustable damping assembly (25, 80) further comprises:
a damper (680) and a reservoir (511), the damper (680) in fluid communication with the reservoir (511), wherein the damper further comprises a chamber (170) containing a damping fluid and a rod (620) moveable into the chamber (170) under compression of the damper (680), wherein the reservoir accepts damping fluid from the chamber (170) as the damping fluid is displaced from the chamber by the incursion of the rod (620) into the chamber (170) during compression of the damper (680);
the reservoir (511) comprising a compensator chamber (154) and said electronically adjustable valve (100), the electronically adjustable valve (100) having a valve member (116) and an actuator (120) for operating the valve member (116) under control of the controller (65), whereby the electronically adjustable valve (100) controls fluid flow into the compensator chamber (154) as the rod (620) moves into the chamber (170).

14. A bicycle as claimed in any preceding claim, wherein said bicycle comprises a trail bike, mountain bike or all-terrain bike (ATB).

## Patentansprüche

1. Fahrrad (101), umfassend einen Rahmen, der einen gefederten Teil (40) und einen ungefederten Teil (10) hat, wobei das Fahrrad ferner umfasst:
einen Terrainsensor;
eine elektronisch einstellbare Dämpferanordnung (25, 80), die wischen dem gefederten Teil (40) und dem ungefederten Teil (10) angebracht ist, wobei die elektronisch einstellbare Dämpferanordnung ein elektronisch einstellbares Ventil (100) zum Steuern einer Dämpfungsgeschwindigkeit für die elektronisch einstellbare Dämpferanordnung (25, 80) umfasst; und
eine Steuerung (65), umfassend einen Prozessor, um eine Position des elektronisch einstellbaren Ventils (100) in Antwort auf einen Input von dem Terrainsensor zu regeln;
wobei der Terrainsensor einen ersten Beschleunigungssensor (5), der mit dem ungefederten Teil (10) verbunden ist, und einen zweiten Beschleunigungssensor (35), der mit dem gefederten Teil (40) verbunden ist, umfasst und wobei die Steuerung (65) geeignet ist, einen Input von sowohl dem ersten beziehungsweise als auch dem zweiten Beschleunigungssensor zu empfangen, um jeden der Inputs zu vergleichen, um eine Einstellposition für das elektronisch einstellbare Ventil (100) entsprechend dem Vergleich zu bestimmen und das elektronisch einstellbare Ventil (100) in die Einstellposition zu regeln, wodurch eine automatische Regulierung der Dämpfungsgeschwindigkeit von der elektronisch einstellbaren Dämpferanordnung bereitgestellt wird; und
einen Pedalkraftsensor, der einen Input für die Steuerung (65) bereitstellt, wobei, wenn der Input von dem zweiten Beschleunigungsensor (35) in der Frequenz mit dem Input von dem Pedalkraftsensor synchronisiert ist, die Steuerung (65) das Verschließen des elektronisch einstellbaren Ventil (100) regelt bis die Synchronisierung eliminiert oder verringert ist.

2. Fahrrad nach Anspruch 1, wobei die Steuerung (65) einen Algorithmus zur Gewichtung der entsprechenden Inputs in dem Vergleichsschritt und zum Erzeugen eines singulären Signals daraus umfasst.

3. Fahrrad nach Anspruch 1 oder 2, wobei, wenn der Input von dem zweiten Beschleunigungssensor (35) im Ausmaß relativ gering ist, die Steuerung (65) geeignet ist, das elektronisch einstellbare Ventil (100) schrittweise zu öffnen, bis von der Steuerung (65) in dem Input von dem zweiten Beschleunigungssensor (35) eine gewisse Zunahme festgestellt wird, und um dann das elektronisch einstellbare Ventil (100) aus dieser Position geringfügig wieder zu schließen.

4. Fahrrad nach einem der vorhergehenden Ansprüche, wobei die automatische Regulierung durch die Steuerung (65) ein automatisches Feststellen und Lösen des elektronisch einstellbaren Ventils (100) in Antwort auf den Vergleich der Inputs von dem ersten Beschleunigungssensor (5) und dem zweiten Beschleunigungssensor (35) umfasst.

5. Fahrrad nach einem der vorhergehenden Ansprüche, wobei die automatische Regulierung durch die Steuerung (65) außer Kraft gesetzt werden kann und/oder durch eine benutzerbedienbare Vorrichtung (50), die an dem Fahrrad in einer Position angebracht ist, die von dem Fahrer des Fahrrades erreichbar ist, wie zum Beispiel am Lenker, eingestellt werden kann und die mit der Steuerung (65) in Kommunikation steht.

6. Fahrrad nach Anspruch 5, wobei die Manipulation der benutzerbedienbaren Vorrichtung (50) einen Fahrer des Fahrrades befähigt die Steuerung (65) außer Kraft zu setzten und das elektronisch einstellbare Ventil (100) festzustellen oder zu lösen.

7. Fahrrad nach Anspruch 5 oder 6, wobei die Manipulation der benutzerbedienbaren Vorrichtung (50) einen Fahrer des Fahrrades befähigt die Steuerung (65) außer Kraft zu setzten und die Position des elektronisch einstellbaren Ventils (100) nach Wunsch auf geschlossen oder auf geöffnet zu regeln oder auf dazwischenliegende Positionen zu drosseln.

8. Fahrrad nach einem der vorhergehenden Ansprüche, wobei der erste Beschleunigungssensor (5) nahe an einer Hinterachse (15) an dem ungefederten Teil (10) des Fahrrads (101) positioniert ist.

9. Fahrrad nach Anspruch 8, wobei der erste Beschleunigungssensor (5) entlang einer vorgeschriebenen Achse eine Inputkraft erkennt und wobei die Ausrichtung der vorgeschriebenen Achse durch den Benutzer und/oder den Fahrradhersteller einstellbar ist, um den ersten Beschleunigungssensor (5) mehr oder weniger für Wellen und Senken auf dem Terrain empfindlich zu machen.

10. Fahrrad nach Anspruch 9, wobei eine winkelige Ausrichtung der vorgeschriebenen Achse über einen Bereich (20) bewegbar ist und wobei optional der Bereich (20) etwa 120° und besonders vorzugsweise 100° ist.

11. Fahrrad nach einem der vorhergehenden Ansprüche, wobei der erste Beschleunigungssensor (5) und/oder der zweite Beschleunigungssensor (35) einen Einachsen- oder einen Dreiachsen-Beschleunigungsmesser umfasst, der während der Verwendung vorzugsweise seine eigene Energie erzeugt.

12. Fahrrad nach einem der vorhergehenden Ansprüche, wobei das elektronisch einstellbare Ventil (100) eine Stelleinrichtung (120) umfasst und wobei die Steuerung (65) die Bewegung der Stelleinrichtung (120) steuert, wodurch durch die Bewegung der Stelleinrichtung (120) eine Dämpfungsgeschwindigkeit für das elektronisch einstellbare Ventil (100) eingestellt wird.

13. Fahrrad nach einem der Ansprüche 1 bis 11, wobei die elektronisch einstellbare Dämpferanordnung (25, 80) ferner umfasst:
einen Dämpfer (680) und ein Reservoir (511), wobei der Dämpfer (680) mit dem Reservoir (511) in Fluidverbindung steht, wobei der Dämpfer ferner eine Kammer (170) umfasst, die ein Dämpferfluid und einen Stab (620) umfasst, der bei Kompression des Dämpfers (680) in die Kammer (170) hinein bewegbar ist, wobei das Reservoir Dämpferfluid aus der Kammer (170) aufnimmt, während Dämpferfluid aus der Kammer durch das Eintreten des Stabs (620) in die Kammer (170) während der Kompression des Dämpfers (680) verdrängt wird;
das Reservoir (511), das eine Ausgleichkammer (154) und das elektronisch einstellbare Ventil (100) umfasst, wobei das elektronisch einstellbare Ventil (100) ein Ventilelement (116) und eine Stelleinrichtung (120), um das Ventilelement (116) unter der Regelung von der Steuerung (65) zu betreiben, umfasst, wodurch das elektronisch einstellbare Ventil (100) den Fluidfluss in die Ausgleichskammer (154) steuert, während sich der Stab (620) in die Kammer (170) bewegt.

14. Fahrrad nach einem der vorhergehenden Ansprüche, wobei das Fahrrad ein Enduro-Fahrrad, Mountainbike oder Geländefahrrad (ATB für engl.: all-terrain bike) umfasst.

## Revendications

1. Bicyclette (101) comprenant un cadre présentant une partie suspendue (40) et une partie non suspendue (10), laquelle bicyclette comprend, de plus :
un capteur de terrain ;
un dispositif d'amortissement réglable par électronique (25, 80) monté entre la partie suspendue (40) et la partie non suspendue (10), ledit dispositif d'amortissement réglable par électronique comprenant une soupape réglable électroniquement (100) permettant de commander le taux d'amortissement du dispositif d'amortissement réglable par électronique (25, 80) ; et
un contrôleur (65) comprenant un processeur pour orienter une position de la soupape réglable électroniquement (100) en réponse à un signal d'entrée provenant du capteur de terrain ;
dans laquelle ledit capteur de terrain comprend un premier capteur d'accélération (5) fixé sur ladite partie non suspendue (10) et un second capteur d'accélération (35) fixé sur la partie suspendue (40), et en ce que ledit contrôleur (65) est conçu pour recevoir un signal d'entrée provenant, respectivement, de chacun des premier et second capteurs d'accélération, afin de comparer chacun des signaux d'entrée, en vue de déterminer une position de réglage pour la soupape réglable électroniquement (100) en fonction de ladite comparaison, et pour orienter ladite soupape réglable électroniquement (100) vers ladite position de réglage de sorte qu'une commande automatique du taux d'amortissement du dispositif d'amortissement réglable par électronique est fournie ; et
un capteur de force de pédale fournissant un signal d'entrée pour ledit contrôleur (65), dans lequel si ledit signal d'entrée provenant dudit second capteur d'accélération (35) est synchronisée en fréquence avec le signal d'entrée provenant dudit capteur de force de pédale, le contrôleur (65) décide la fermeture de ladite soupape réglable électroniquement (100) jusqu'à ce que ladite synchronisation soit supprimée ou réduite.

2. Bicyclette selon la revendication 1, dans laquelle ledit contrôleur (65) comprend un algorithme permettant d'évaluer lesdits signaux d'entrée respectifs dans ladite étape de comparaison et de générer à partir de là un signal singulier.

3. Bicyclette selon la revendication 1 ou 2 , dans laquelle si ledit signal d'entrée provenant dudit second capteur d'accélération (35) est d'une intensité relativement faible, ledit contrôleur (65) est conçu pour ouvrir progressivement ladite soupape réglable électroniquement (100) jusqu'à ce qu'une certaine augmentation du signal d'entrée provenant dudit second capteur d'accélération (35) soit constatée par ledit contrôleur (65), et pour refermer ensuite légèrement la soupape réglable électroniquement (100) à partir de cette position.

4. Bicyclette selon l'une quelconque des revendications précédentes, dans laquelle ladite commande automatique fournie par ledit contrôleur (65) comporte un verrouillage et un déverrouillage automatique de ladite soupape réglable électroniquement (100) en réponse à ladite comparaison des signaux d'entrée provenant dudit premier capteur d'accélération (5) et dudit second capteur d'accélération (35).

5. Bicyclette selon l'une quelconque des revendications précédentes, dans laquelle ladite commande automatique fournie par ledit contrôleur (65) peut être neutralisée et/ou ajustée par un dispositif actionnable par un utilisateur (50) qui est monté sur ladite bicyclette dans une position qui peut être atteinte par un utilisateur de la bicyclette, telle que le guidon, et qui est en communication avec ledit contrôleur (65).

6. Bicyclette selon la revendication 5, dans laquelle la manipulation dudit dispositif actionnable par un utilisateur (50) permet à l'utilisateur de la bicyclette de neutraliser le contrôleur (65) et de verrouiller et de déverrouiller la soupape réglable électroniquement (100).

7. Bicyclette selon la revendication 5 ou 6, dans laquelle la manipulation dudit dispositif actionnable par un utilisateur (50) permet à un utilisateur de la bicyclette de neutraliser le contrôleur (65) et de choisir la position de la soupape réglable électroniquement (100) en vue de fermer, d'ouvrir ou d'obturer la soupape au niveau de positions intermédiaires, comme cela est souhaité.

8. Bicyclette selon l'une quelconque des revendications précédentes, dans laquelle ledit premier capteur d'accélération (5) est positionné à proximité d'un axe arrière (15) sur ladite partie non suspendue (10) de ladite bicyclette (101).

9. Bicyclette selon la revendication 8, dans laquelle ledit premier capteur d'accélération (5) capte une force d'entrée le long d'un axe déterminé, et dans laquelle l'orientation de l'axe déterminé peut être réglée par l'utilisateur et/ou le fabricant de la bicyclette pour rendre le premier capteur d'accélération (5) plus ou moins sensible aux bosses et aux creux du terrain.

10. Bicyclette selon la revendication 9, dans laquelle une orientation angulaire dudit axe déterminé peut se déplacer dans les limites d'une plage (20) et, facultativement, dans laquelle ladite plage (20) est de 120° environ, et avec plus de préférence, de 100°.

11. Bicyclette selon l'une quelconque des revendications précédentes, dans laquelle ledit premier capteur d'accélération (5) et/ou ledit second capteur d'accélération (35) comprend un accéléromètre à axe unique ou triaxial, lequel, de préférence, génère sa propre énergie lors de l'utilisation.

12. Bicyclette selon l'une quelconque des revendications précédentes, dans laquelle ladite soupape réglable électroniquement (100) comprend un actionneur (120) et ledit contrôleur (65) commande le déplacement dudit actionneur (120) de sorte que le taux d'amortissement de ladite soupape réglable électroniquement (100) est réglé par le déplacement de l'actionneur (120).

13. Bicyclette selon l'une quelconque des revendications 1 à 11, dans laquelle ledit dispositif d'amortissement réglable par électronique (25, 80) comprend, de plus :
un amortisseur (680) et un réservoir (511), l'amortisseur (680) étant en communication de fluide avec le réservoir (511), dans laquelle l'amortisseur comprend, de plus, une chambre (170) contenant un fluide d'amortissement et une tige (620) pouvant se déplacer dans la chambre (170) sous l'effet de compression de l'amortisseur (680), dans laquelle le réservoir reçoit le fluide d'amortissement à partir de la chambre (170) lorsque le fluide d'amortissement se déplace depuis la chambre du fait de l'incursion de la tige (620) dans la chambre (170) pendant la compression de l'amortisseur (680) ;
le réservoir (511) comprenant une chambre de compensation (154) et ladite soupape réglable électroniquement (100), la soupape réglable électroniquement (100) présentant un élément de soupape (116) et un actionneur (120) permettant d'actionner l'élément de soupape (116) sous la commande du contrôleur (65), de sorte que la soupape réglable électroniquement (100) contrôle l'écoulement du fluide vers la chambre de compensation (154) lorsque la tige (620) de déplace dans la chambre (170).

14. Bicyclette selon l'une quelconque des revendications précédentes, dans laquelle ladite bicyclette comprend un vélo de route, un vélo pour itinéraire de montagne ou un vélo tout terrain (VTT).
